# EUROPÄISCHE PATENTANMELDUNG

(11) **EP 0 723 893 A1**
(43) Veröffentlichungstag der Anmeldung: **31.07.1996**
(21) Anmeldenummer: 96100639.2
(22) Anmeldetag: 18.01.1996
(51) Int. Cl.: B60R 21/22, B60J 1/08, B60J 1/17

(54) **Kraftfahrzeug mit in zumindest einer Fahrzeugseitenwand angeordneten Seitenfenstern und mit mindestens einem Seitenairbag**

(30) Priorität: 26.01.1995 DE 29501218 U
(71) Anmelder: ADAM OPEL AG, D-65423 Rüsselsheim (DE)
(72) Erfinder: Böttger, Friedhelm, Dipl.-Ing., D-55286 Sulzheim (DE); Gätke, Christian, Dipl.-Ing., D-65428 Rüsselsheim (DE)
(74) Vertreter: Kümpfel, Heinz, Dipl.-Ing.

(57) **Zusammenfassung**

Die Erfindung bezieht sich auf ein Kraftfahrzeug mit in einer Fahrzeugseitenwand (4) angeordneten Seitenfenstern (5) und mit einem Seitenairbag an der Fahrzeugseite dieser Fahrzeugseitenwand (4). Die Fläche des Seitenfensters (5) ist mit einer transparenten reißfesten Folie (11) überdeckt. Die Folie (11) ist an ihren Rändern mit dem Rahmen (12) des Seitenfensters (5) verbunden. Dadurch kann sich bei Aktivierung des Seitenairbags durch einen Crash der entfaltete Luftsack (9) an der über die Öffnung des Seitenfensters (5) gespannten Folie (11) abstützen, auch wenn das Glas des Seitenfensters (5) beim Crash zerbrochen ist.

## Beschreibung

Die Erfindung betrifft ein Kraftfahrzeug nach dem Oberbegriff des Anspruches 1.

Derartige Kraftfahrzeuge mit Seitenairbags sind z. B. mit DE 43 28 528 beschrieben, wobei ein Fahrzeugsitz an seiner Seite einen zusammengefalteten Luftsack trägt, der sich im Crashfall entfaltet zwischen die Seitenstruktur des Fahrzeuges und den zu schützenden Insassen legt. Ein am Sitz angeordneter Seitenairbag hat zwar immer eine relativ optimale Zuordnung zu dem zu schützenden Fahrzeuginsassen, da er ja bei Verstellung des Sitzes mit verstellt wird. Jedoch werden bei einem Seitencrash auch die auf der Unfallseite befindlichen Glasscheiben der Fensterflächen zerbrechen. Damit hat der Luftsack im Bereich des Kopfes des Fahrzeuginsassen keine Abstützfläche an der Seitenstruktur des Fahrzeuges. Der Kopf eines Insassen kann so nur sehr unzureichend abgestützt und vor Verletzungen geschützt werden.

Mit DE 43 04 152 ist eine Schutzvorrichtung für Fahrzeuginsassen mit einem Seitenairbag beschrieben, der im Bereich einer Ober- und einer Unterkante eines Fahrzeugseitenfensters angebracht ist, wobei die beiden Teile sich bei Aktivierung aufeinanderzu bewegen und im aufgeblasenen Zustand derart berühren, daß eine begrenzt querfeste Verbindung entsteht. Diese Verbindung soll im Crashfall die Öffnung eines zerbrochenen Seitenfensters überdecken. Da der Luftsack eines Airbags jedoch aus faltbarem Material besteht, kann die so gewonnene Quersteifigkeit nur sehr gering sein. Der Luftsack kann nach Zerstörung der Seitenscheibe dem auftreffenden Kopf eines Fahrzeuginsassen kaum noch abstützende Kraft entgegensetzen, da er sich selbst an der Seitenwand nicht mehr flächig abstützen kann. Nachteilig ist auch bei einem an der Fahrzeugseitenwand angebrachten Seitenairbag, daß bei unterschiedlichen Sitzverstellungen die Schutzwirkung unterschiedlich ist, da die Positionierung des Fahrzeuginsassen zum Seitenairbag mit der Sitzverstellung variiert.

Ein weiterer airbagbestückter Insassen-Seitenschutz an Kraftfahrzeugen ist mit DE 43 07 175 beschrieben. Bei diesem sind miteinander verbundene Luftsäcke von Seitenairbags im desaktivierten Zustand zumindest teilweise in einem Dachrahmenbereich oberhalb des Seitenfensters zusammengelegt untergebracht. Im aktivierten Zustand sollen sich diese Luftsäcke vor dem Seitenfenster erstrecken, wobei sie sich während des Aktivierungsvorganges teilweise diagonal über die Fensteröffnung entfalten sollen. Jedoch kann auch ein solcher Seitenairbag nur bedingt seitliche Kräfte aufnehmen, da ihm bei zerbrochener Fensterscheibe die Auflagefläche fehlt. Auch hier trifft der Nachteil des mit der Seitenwand fest verbundenen Airbags auf, der sich durch mögliche unterschiedliche Sitzpositionen des zu schützenden Fahrzeuginsassen ergibt.

Mit DE 40 16 611 ist eine Sicherheitseinrichtung für Insassen eines Kraftfahrzeuges beschrieben, bei welcher ein Aufprallsensor bei einem Unfall eine Schlageinrichtung auslöst, welche die Glasteile einer als Sicherheitsverbundglasscheibe mit eingearbeiteter Kunststoff-Zwischenfolie ausgebildete Seitenscheibe zerstört, so daß die an sich harte Seitenscheibe nachgiebig weich wird, da nur noch die Kunststoff-Zwischenfolie trägt. Ein auf die Fläche der Seitenscheibe während eines Seitencrashs auftreffender Kopf eines Passagiers wird so von der Folie weich aufgefangen. Allerdings ist der Abbremsweg des Kopfes relativ kurz, und an der auffangenden Folie können auch noch Glasreste haften, die zu erheblichen Verletzungen führen können. Die Anordnung eines Seitenairbags ist hier nicht vorgesehen.

Mit DE 36 32 472 wird eine Kraftfahrzeugscheibe aus Silikat-Glas beschrieben, deren Innenseite mit einer Splitterschutzfolie überdeckt ist, die an ihren Rändern kraftschlüssig mit der Rahmendichtung verbunden ist. Die Splitterschutzfolie soll einerseits nach Art eines Sprungtuches die Aufprallenergie von Fahrzeuginsassen bei einem Unfall abbauen, den Fahrzeuginsassen in einem solchen Falle aber auch vor Schnittverletzungen schützen. Infolge des geringen Bremsweges ist der Insassenschutz bei einem Seitencrash durch eine solche Maßnahme nicht ausreichend. Ein Seitenairbag ist in dieser Schrift nicht genannt.

Aufgabe der Erfindung ist es, ein Kraftfahrzeug der im Oberbegriff des Anspruches 1 genannten Art so zu verbessern, daß der Luftsack eines Seitenairbags im Crashfall eine ausreichende Stützkraft aufbringen kann, auch wenn das Glas der Seitenscheibe während des Crashs zerstört wird.

Erfindungsgemäß wird diese Aufgabe gemäß den kennzeichnenden Merkmalen des Anspruches 1 gelöst.

Durch die Kombination eines an sich bekannten, mit dem Sitz verbundenen Seitenairbags und einem durch eine reißfeste Folie überdeckten Seitenfenster kann sich der schützende Luftsack bei einem Crash an der richtigen Position in Bezug zum Fahrzeuginsassen entfalten und an dieser Stelle auch an der Fahrzeugseitenwand optimal abstützen, und zwar auch dann, wenn die Glasscheibe des Seitenfensters durch die Crashfolgen zerbrochen ist. Die unzerbrechliche reißfeste Folie bietet dem Luftsack ausreichend Auflage, damit dieser seine schützende Wirkung entfalten kann.

Die Merkmale der weiteren Ansprüche beziehen sich auf vorteilhafte Ausgestaltungen der Erfindung.

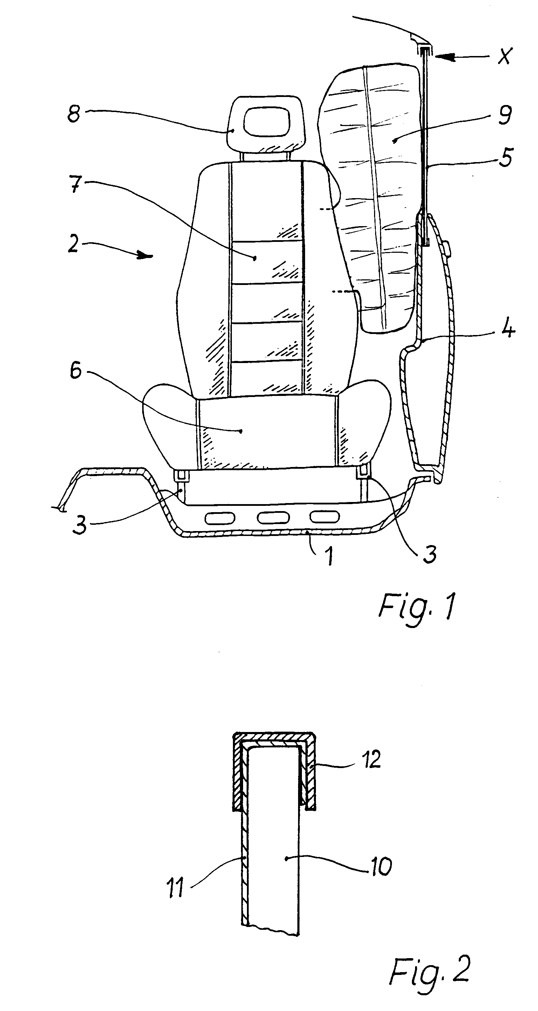

Ein Ausführungsbeispiel der Erfindung ist nachstehend anhand einer Zeichnung näher beschrieben. Es zeigen
- Fig. 1:: einen Fahrzeugsitz in einem Kraftfahrzeug mit einem seitlich in der Lehne integrierten Seitenairbag;
- Fig. 2:: die Einzelheit bei X in Figur 1 in vergrößertem Maßstab.

Auf dem Boden 1 eines Kraftfahrzeuges ist ein Fahrzeugsitz 2 mittels der Sitzschienen 3 längsverschieblich gelagert. An den Boden 1 schließen sich beidseits des Kraftfahrzeuges Fahrzeugseitenwände 4 an. Jede der Fahrzeugseitenwände 4 ist mit einem Seitenfenster 5 versehen. Der Fahrzeugsitz 2 weist ein Sitzteil 6, eine Lehne 7 und eine Kopfstütze 8 auf. In der Lehne 7 ist ein Seitenairbag integriert, dessen Luftsack 9 bei Aktivierung des Seitenairbags sich zu einer dem Fahrzeugsitz 2 benachbarten Fahrzeugseitenwand 4 aufbläht. Dabei legt sich der Luftsack 9 sowohl an den unteren Teilen der Fahrzeugseitenwand 4 als auch an den Seitenfenstern 5 an. Die Seitenfenster 5 bestehen in an sich bekannter Weise aus einer Glasscheibe 10, die zum Fahrzeuginnenraum hin mit einer reißfesten transparenten Folie 11 überdeckt ist, welche an ihren Rändern mit Teilen der Fahrzeugseitenwand 4, nämlich einem die Glasscheibe 10 umrandenden Rahmen 12, durch Kleben verbunden ist.

Wird bei einem Seitencrash die Glasscheibe 10 zertrümmert, dann überdeckt die Folie 11 weiterhin die Fensteröffnung in der Fahrzeugseitenwand 4. Die reißfeste Folie 11 bietet damit auch während und nach dem Crash dem Luftsack 9, der sich vom Fahrzeugsitz 2 her entfaltet, eine ausreichende Auflage. Der Kopf eines Fahrzeuginsassen, der bei einem Seitencrash in Richtung auf das Seitenfenster 5 hin geschleudert wird, kann so vom gut abgestützten Luftsack 9 weich abgebremst werden. Der Luftsack 9 wird sich auch in optimaler Weise in Bezug zu dem Fahrzeuginsassen, welcher auf dem Fahrzeugsitz 2 sitzt, entfalten können, da er mit der Lehne 7 des Fahrzeugsitzes 2 die Verschiebebewegungen des Fahrzeugsitzes 2 gegenüber dem Boden 1 des Kraftfahrzeuges mitmacht und somit immer die gleiche Lage zum Fahrzeuginsassen einnimmt.

## Patentansprüche

1. Kraftfahrzeug mit in zumindest einer Fahrzeugseitenwand angeordneten Seitenfenstern und mit mindestens einem Seitenairbag, bestehend aus einem zwischen Fahrzeugsitz und Fahrzeugseitenwand am Fahrzeugsitz angeordneten, sich zur Fahrzeugseitenwand hin entfaltenden Luftsack, einem Gasgenerator zum Aufblasen des Luftsackes und einem Sensor zum Auslösen des Gasgenerators bei einem Seitenaufprall, **dadurch gekennzeichnet**, daß die Fläche der in der Fahrzeugseitenwand (4) angeordneten Seitenfenster (5) mit einer transparenten reißfesten an ihren Rändern mit Teilen der Fahrzeugseitenwand (Rahmen 12) verbundenen Folie (11) überdeckt ist, an welcher sich der entfaltende Luftsack (9) abstützt.

2. Kraftfahrzeug nach Anspruch 1, **dadurch gekennzeichnet**, daß die Folie (11) Teil einer Verbundglasscheibe ist und deren Ränder mit Teilen der Fahrzeugseitenwand (Rahmen 12) verbunden sind.

3. Kraftfahrzeug nach Anspruch 2, **dadurch gekennzeichnet**, daß die Verbundglasscheibe aus einer Glasschicht (10) und einer durch die Folie (11) gebildeten Schicht besteht, wobei die von der Folie (11) gebildete Schicht zum Fahrzeuginnenraum hin weist.

4. Kraftfahrzeug nach Anspruch 1 bis 3, **dadurch gekennzeichnet**, daß die Folie (11) mit ihren Rändern an einem zur Fahrzeugseitenwand (4) annähernd parallel verschiebbaren, einen Teil der Fahrzeugseitenwand (4) bildenden Rahmen (12) befestigt ist.

5. Kraftfahrzeug nach Anspruch 4, **dadurch gekennzeichnet**, daß der Rahmen (12) eine in der Fahrzeugseitenwand (4) versenkbare Seitenscheibe umschließt.

6. Kraftfahrzeug nach Anspruch 2 und 3, **dadurch gekennzeichnet**, daß die Verbindung der Folie (11) mit Teilen der Fahrzeugseitenwand (4) durch Kleben erfolgt.
